# EUROPEAN PATENT APPLICATION

(11) **EP 2 581 267 A1**
(43) Date of publication of application: **17.04.2013**
(21) Application number: 11184451.0
(22) Date of filing: 10.10.2011
(51) Int. Cl.: B60R 1/00

(54) **Driving assistance device**

(71) Applicant: Robert Bosch GmbH, 70442 Stuttgart (DE)
(72) Inventor: Mate, Szabolcs, 7741 Nagykozár (HU)

(57) **Abstract**

The present invention relates to a driving assistance device (10) for a vehicle (100), comprising camera means (20) and display means (30) being in signal communication with each other, characterized in that the camera means (20) are configured to be positioned inside the vehicle (100) to provide the view of a co-driver of the vehicle (100) to be displayed on the display means (30).

## Description

The present invention relates to a driving assistance device for a vehicle.

### STATE OF THE ART

Driving assistance devices for vehicles are common knowledge and are used to help drivers of vehicles with several problems, during driving a vehicle. One problem, which occurs driving across the border between different countries, is the problem of different traffic systems. In general two different traffic systems exist. The most common traffic system is the right-hand traffic system, which is used in most of the countries worldwide. However, also a left-hand traffic system is known, which is used for example in Great Britain, Australia, India and other former colonies of the United Kingdom.

To comply with left-hand traffic and right-hand traffic, vehicles are manufactured in particular for one of the two different traffic systems. Therefore, to comply with a right-hand traffic, the steering wheel of the driver and therefore the driver seat is located on the left side of the vehicle. The other way around, a vehicle which is configured to comply with the left-hand driving system, the driver seat and therefore the steering wheel of the vehicle is positioned on the right-hand side of the vehicle.

If the driver of a vehicle, configured for left-hand-traffic (so called L-Vehicle) is used in a right-hand traffic system (R-Traffic) or the other way around, the following problems may occur. During the driving, the driver of the vehicle may run up to the back of a vehicle in front of the driver's vehicle and wants to overtake the slower vehicle. The driver has to make sure that the counter-lane is free before the overtake process can take place. If the driver drives an L-Vehicle in an R-Traffic-System, he has worse view of the counter-lane than a driver of an R-Vehicle in an R-Traffic-System.

The driver of the vehicle usually tries to reduce this problem by driving the vehicle more left so that the risk occurs to hit vehicles driving in the counter-lane.

The same problem as described above also occurs when using separate lanes on a multiple lane street or when using separate lanes for turning left or right at a crossroad. The GB 2 397 189 discloses a monitoring system for vehicles. However, this monitoring system is not able to provide easy accessible information for the driver of the vehicle.

The object of the present invention is to solve aforesaid problems. In particular, it is an object of the present invention to provide a driving assistance device, which offers higher flexibility of the use of a right-hand vehicle in a left-hand traffic system and the other way round.

Aforesaid problem is solved by a driving assistance device for a vehicle comprising the features of independent claim 1. Further advantages of the present invention are given with the features of the dependent claims.

### DISCLOSURE OF INVENTION

According to the present invention, a driving assistance device for a vehicle comprises camera means and display means. A camera means and a display means are in a signal communication with each other. The driving assistance device is characterized in that the camera means are configured to be positioned inside the vehicle to provide a view of a co-driver of the vehicle to be displayed on the display means. The camera means can for example be provided in the upper corner of a windshield of the vehicle. The driving assistance device can be power by battery or by any internal power supply of the vehicle like the cigarette lighter.

It is already known to provide camera means at the outside of vehicles to get a better overview of the streets around the vehicle in particular a so called rear drive camera. However, according to the present invention, the camera means are configured to a position inside the vehicle. Therefore, less dirt gets into contact with the camera means and are therefore better protected from the environment. Moreover, the camera means are configured to provide the view of the co-driver of the vehicle to be displayed on the display means. It has to be understood that the driver is sitting on the driving seat watching the display means and is provided with a view which is comparable to the view of the co-driver. Therefore, the display means gives almost the exact information to the driver about the possible view from the co-driver seat. Therefore, if the driver of a vehicle using an inventive driving assistance device crosses the border between two countries having different traffic systems, he can counter the problem described in the introductory part of this application by using the driving assistance device. That way, he gets the information of the view of the co-driver, which would be the normal driver position in the different traffic system. Due to the fact that he gets the view of the co-driver, there is no need to adapt to other kind of views, which would be necessary if the camera means would be provided at the outer part of the vehicle or at some lower or higher locations for example the roof or the bumper of the vehicle.

It could be of advantage, if a driving assistance device according to the present invention is characterized in that the camera means and the display means are covered at least partly by one single-housing. In other words, camera means and display means of such an embodiment of the driving assistance device are combined into one housing and therefore are easily transportable and easy to handle. The camera means and the display means are located on different sides of the driving assistance device to make sure that the interaction between "providing the view of the co-driver" and "displaying on the display means" in a way that it can be recognized by the driver of the vehicle, is achieved. Such a driving assistance device can for example be used with a connector dock inside the vehicle to be fully flexible to be used with different kinds of vehicles. Moreover, it is possible that according to the present invention a control unit is provided for generating additional information out of the picture received by the camera means to be displayed on the display means. The control unit can for example be housed in one housing with the camera means and the display means. Such additional information can for example be generated by capturing the picture received by the camera means and receive more information out of the captured content. For example this could be the recognition of traffic signs, the recognition of specific traffic situations and the displaying of specific warning signals or giving warning by sound, vibration or light.. For example there could be different warning signals for a car in the next lane, for the fact that the next lane would be blocked or the result of the calculation of an overtaking process is possible or not.

It could also be of advantage, that according to the present invention the driving assistance device is characterized in that the camera means and/or the display means are configured to be removable from the vehicle. The removability leads to the possibility that the driving assistance device is usable in one or more different cars or the rest of the device is protected against usage and robbery in the remaining car. For example, in the use for car rental, such a driving assistance device can be used to reduce the risk of demolition of the car due to crash situations when the driver who is not used to the country traffic system rents such a car. Moreover, such mobile system for a driving assistance device can be used to tune already existing cars and provide them with functionality according to the present invention.

According to a further aspect of the present invention it is possible that the camera means and/or the display means are configured to be fixedly mounted within the vehicle. In other words this can be described as a built-in system a particular for new cars or for tuning already existing cars. The use of built-in systems results in the advantage that such a built-in system is safer against robbery of the system out of the car. A driving assistance device according to such embodiment moreover comprises the possibility to interact with the control units of the car in particular to interact with already existing display means for example of multimedia display or a navigation system. This could reduce the costs of the use of a driving assistance device according to the present invention. If the speedometer of a car is used, the display means are hidden from the sunlight.

A further aspect of the present invention could be that the driving assistance device is characterized in that activation means for activation of the camera means and/or the display means are provided. Such activation means can for example be buttons or any kind of sensors to start the activation of the driving assistance device. This leads to the advantage that the driving assistance device is only used and therefore does only consume energy when it is really necessary. In case that the vehicle enters a situation where the driving assistance device is necessary for the driver, the activation means activate the camera means and/or the display means. For example, the sensors can sense the movement of the turn light arm of a vehicle of the vehicle. In particular by such sensors or activators an automatic or manual activation can be provided by the activation means. Of course it is also possible that a manual activation for example by buttons in the area of the steering wheel of the vehicle is possible. For example, only the display means can be switched on and off to generate a fast reactivation time.

It is also possible that according to the present invention the display means comprise a head-up display to be projected on the inside of the windshield of a vehicle. Head-up displays for the use in an inventive driving assistance device comprise the advantage that the driver of the vehicle is less distracted from the street and also is able to use the inventive driving assistance device.

Moreover, it is possible that according to the present invention a GPS sensor is provided to generate information on the actual global position and the traffic system at this position in particular as to right-hand traffic and/or left-hand traffic. Over the GPS sensor, the global position, for example related to a navigation system of the vehicle, can be used. The GPS signal and therefore the actual global position can be combined with the information about the traffic system of different countries. Therefore, according to this embodiment, if the driving assistance device gets the information that the present traffic system at the present position does not fit to the manufacturing configuration of the present vehicle, the information can be displayed on the display means and/or the activation means of the driving assistance device can automatically activate the driving assistance device. In this case, the GPS system is the activator.

It is also possible that according to the present invention the signal communication between the camera means and the display means is a wireless communication. Such wireless communication can for example be a Bluetooth communication or a wireless local area network so-called WLAN-Communication.

### PREFFERED EMBODIMENTS

The present invention is described in more detail, with respect to the accompanying drawings. The terms "left", "right", "above" and "below" are used in relation to the figures with an orientation with the normal readable reference signs. The figures show:

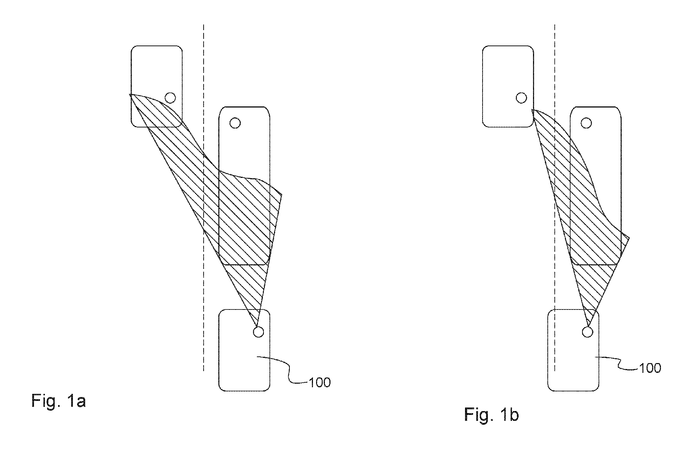

- Figure 1a: a situation of a left-hand vehicle in a right-hand traffic system,
- Figure 1 b: the situation of figure 1 a during the compensation try of the driver,
- Figure 2: one schematic view of the interior of a vehicle, comprising an inventive driving assistance device,
- Figure 3: one embodiment of an activation means,
- Figure 4: a further embodiment of an activation means,
- Figure 5a: a further embodiment of a driving assistance device according to the present invention, and
- Figure 5b: the driving assistance device of figure 5a in the front side view.

With respect to figure 1 a and figure 1 b, the problems of the state-of-the-art are described in general.

If a vehicle 100 is configured to be driven normally in a left-hand traffic system and has to be driven in a right-hand traffic system, the following problem can occur. In figure 1 a the vehicle 100 follows a large vehicle and wants to overtake the large vehicle or any vehicle which is build up high or packed in full way. The driver of vehicle 100 is seated on the right side but has to comply with the right-hand traffic system of this country. To overtake the large vehicle, he has to get more view of the counter-lane to make sure that there is enough space to fulfill the overtake process. In particular he has to make sure that no other cars are coming along the counter-lane which disables the overtaking process. In figure 1 a, with shading, the area is marked which is not visible for the driver of the vehicle 100. To get more information about the counter-lane, the driver of the vehicle 100 moves the vehicle 100 more in the direction of the counter-lane, namely to the left side of figure 1 a. The result can be seen in figure 1 b. The driver of vehicle 100 has moved the vehicle 100 already partly into the counter-lane to get the information, in particular the view, of the counter-lane. This implies the risk that a vehicle coming in the counter-lane collides with the vehicle 100 and therefore a crash situation occurs.

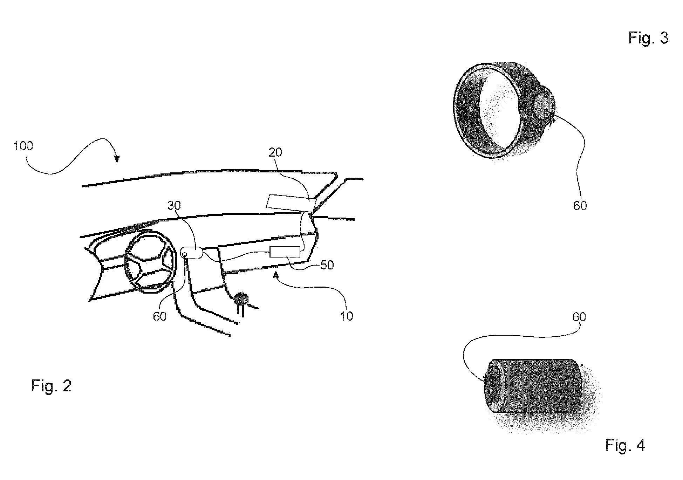

In figure 2, in a schematic view, the use of a driving assistance device 10 of the present invention is disclosed. It makes use of camera means 20 and display means 30. The camera means 20 are positioned within the vehicle at a position where the view of the co-driver can be received by the camera means 20. This information, in particular the picture, is provided to a control unit 50 which is also located within the vehicle 100. This information can be, directly or after an interpretation, communicated to the display means 30 which are positioned within the vehicle 100 to be recognized by the driver of the vehicle 100. Moreover, activation means 60 are provided at the display means 30 to activate the driving assistance device.

Figures 3 and 4 show two different possibilities of manual activation means 60. According to the embodiment of figure 3 the activation means 60 can be a button which is mounted to the steering wheel by a ring surrounding a part of the steering wheel. The ring can or example be a hook-and-loop ring. The button of figure 4 for the activation means 60 can be located at the display means 30 or anywhere else within the vehicle 100, for example can be plugged onto the end of any arms around the steering wheel.

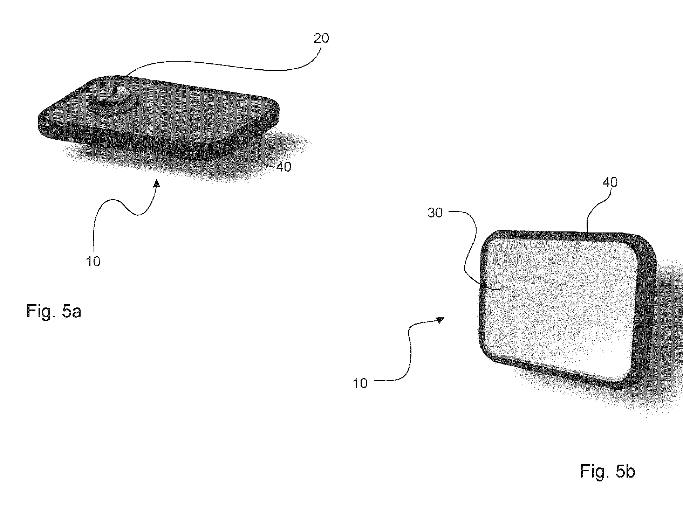

In figures 5a and 5b a further embodiment of the present invention is disclosed. The driving assistance means 10 is located within one single housing 40 in particular as to the camera means 20 and the display means 30. The camera means 20 are located at the rear side of the housing 40 and the display means 30 are located at the front side of the housing 40. Thereby, in particular special dock connectors can be used within the vehicle 100 to mechanically hold the housing 40 of the driving assistance device 10. After connecting the driving assistance device 10 to such a connectors dock within the vehicle 100, it can make a use of the inventive idea to provide the view of the co-driver on the display 30.

Above description of the embodiments describes the present invention by the way of examples. Therefore, the features described with respect to different embodiments can, if of technical sense, be combined with each other without leaving the scope of the present invention.

## Claims

1. Driving assistance device (10) for a vehicle (100), comprising camera means (20) and display means (30) being in signal communication with each other, **characterized in that** the camera means (20) are configured to be positioned inside the vehicle (100) to provide the view of a co-driver of the vehicle (100) to be displayed on the display means (30).

2. Driving assistance device (10) according to claim 1, **characterized in that** the camera means (20) and the display means (30) are covered at least partly by one single housing (40).

3. Driving assistance device (10) according to any of the preceding claims, **characterized in that** a control unit (50) is provided for generating additional information out of the picture received by the camera means (20) to be displayed on the display means (30).

4. Driving assistance device (10) according to any of the preceding claims, **characterized in that** the camera means (20) and/or the display means (30) are configured to be removable from the vehicle (100).

5. Driving assistance device (10) according to any of the preceding claims, **characterized in that** the camera means (20) and/or the display means (30) are configured to be fixedly mounted to the vehicle (100).

6. Driving assistance device (10) according to any of the preceding claims, **characterized in that** activation means (60) for activation of the camera means (20) and/or the display means (30) are provided.

7. Driving assistance device (10) according to any of the preceding claims, **characterized in that** the display means (30) comprise a head up display to be projected on the inside of the windshield of the vehicle (100).

8. Driving assistance device (10) according to any of the preceding claims, **characterized in that** a GPS sensor is provided to generate information on the actual global position and the traffic system at this position, in particular as to right hand traffic and left hand traffic.

9. Driving assistance device (10) According to any of the preceding claims, **characterized in that** the signal communication between the camera means (20) and the display means (30) is a wireless or a wired communication.
